# EUROPÄISCHE PATENTANMELDUNG

(11) **EP 3 656 490 A1**
(43) Veröffentlichungstag der Anmeldung: **27.05.2020**
(21) Anmeldenummer: 18207815.4
(22) Anmeldetag: 22.11.2018
(51) Int. Cl.: B22F 3/105, B33Y 50/02

(54) **VERFAHREN ZUM BEREITSTELLEN VON DATEN FÜR EINE ADAPTIVE TEMPERATURREGELUNG**

(71) Anmelder: Siemens Aktiengesellschaft, 80333 München (DE)
(72) Erfinder: Goldammer, Matthias, 80687 München (DE); Hanebuth, Henning, 85652 Pliening OT Gelting (DE); Sterr, Alexander, 85649 Brunnthal (DE)

(57) **Zusammenfassung**

Es wird ein Verfahren zum Bereitstellen von Daten (D) für eine Temperaturregelung in der additiven Herstellung eines Bauteils (10) angegeben. Das Verfahren umfasst, a), Erfassen von Temperaturdaten (T) jeweils an verschiedenen Positionen (P1, P2) einer additiv aufgebauten Schicht (1), b), Bearbeiten der Schicht (1) für das Bauteil (10) mit einer Bearbeitungseinrichtung (20) an den Positionen (P) der Schicht (1), wobei Regelungsdaten (R) zur Regelung der Bearbeitungseinrichtung positionsabhängig erfasst werden, und, c), das Erzeugen eines adaptierten Datensatzes (D') aus den erfassten Daten (R, T) umfassend positionsabhängige adaptierte Regelungsdaten (R'). Weiterhin werden eine entsprechende Vorrichtung, ein Computerprogrammprodukt und ein Verfahren zur additiven Herstellung eines Bauteils sowie ein entsprechendes Bauteil angegeben.

## Beschreibung

Die vorliegende Erfindung betrifft ein Verfahren zum Bereitstellen von Daten für eine, insbesondere adaptive, Temperaturregelung in der additiven Herstellung eines Bauteils, vorzugsweise der pulverbett-basierten Herstellung. Weiterhin werden eine Vorrichtung, ein Computerprogrammprodukt sowie ein Verfahren zur additiven Herstellung des Bauteils angegeben, welches die bereitgestellten Daten nutzt.

Das Bauteil ist vorzugsweise für den Einsatz in einer Strömungsmaschine, vorzugsweise im Heißgaspfad einer Gasturbine vorgesehen. Das Bauteil besteht vorzugsweise aus einer Superlegierung, insbesondere einer nickel- oder kobaltbasierten Superlegierung. Die Legierung kann beispielsweise ausscheidungsgehärtet oder mischkristallgehärtet sein.

In Gasturbinen wird thermische Energie und/oder Strömungsenergie eines durch Verbrennung eines Brennstoffs, z.B. eines Gases, erzeugten Heißgases in kinetische Energie (Rotationsenergie) eines Rotors umgewandelt. Dazu ist in der Gasturbine ein Strömungskanal ausgebildet, in dessen axialer Richtung der Rotor bzw. eine Welle gelagert ist.

Zweckmäßigerweise ragen die Turbinenschaufeln in den Strömungskanal hinein. Wird der Strömungskanal von einem Heißgas durchströmt, werden die Laufschaufeln mit einer Kraft beaufschlagt, die in ein auf die Welle wirkendes Drehmoment umgewandelt wird, das den Turbinenrotor antreibt, wobei die Rotationsenergie z.B. zum Betrieb eines Generators genutzt werden kann.

Moderne Gasturbinen sind Gegenstand stetiger Verbesserung, um ihre Effizienz zu steigern. Dies führt allerdings unter anderem zu immer höheren Temperaturen im Heißgaspfad. Die metallischen Materialien für Laufschaufeln, insbesondere in den ersten Stufen, werden ständig hinsichtlich ihrer Festigkeit bei hohen Temperaturen (Kriechbelastung, thermomechanische Ermüdung) verbessert.

Die generative oder additive Fertigung wird aufgrund ihres für die Industrie disruptiven Potenzials zunehmend interessant auch für die Serienherstellung der oben genannten Turbinenkomponenten, wie beispielsweise Turbinenschaufeln oder Brennerkomponenten.

Additive Herstellungsverfahren umfassen beispielsweise als Pulverbettverfahren das selektive Laserschmelzen (SLM) oder Lasersintern (SLS), oder das Elektronenstrahlschmelzen (EBM).

Ein Verfahren zum selektiven Laserschmelzen ist beispielsweise bekannt aus EP 2 601 006 B1.

Additive Fertigungsverfahren (englisch: "additive manufacturing") haben sich weiterhin als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils fast ausschließlich auf Basis einer entsprechenden CAD-Datei und der Wahl entsprechender Fertigungsparameter erfolgen kann.

Der vorliegend beschriebene Ausdruck "Computerprogrammprodukt" kann z.B. ein Computerprogramm-Mittel darstellen oder umfassen, und beispielsweise als Speichermedium, wie z.B. Speicherkarte, USB-Stick, CD-ROM, DVD, oder auch in Form einer herunterladbaren Datei von einem Server in einem Netzwerk bereitgestellt oder umfasst werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Ein allgegenwärtiges Problem bei additiven Herstellungsverfahren für hochbelastete oder hochbelastbare Bauteile sind die strukturellen Eigenschaften bzw. Materialeigenschaften, welche konventionellen Fertigungstechniken häufig nachstehen. Um bessere Materialeigenschaften in der additiven Fertigung zu erreichen, kann zur besseren Steuerung des Aufheiz- und Abkühlverhaltens zusätzlich zum Laser eine weitere Heizquelle eingesetzt werden. Bei der Verarbeitung von Metallen, insbesondere Superlegierungen, eignen sich hierfür Induktionsheizsystem, die allerdings durch die ungleichmäßige Einbringung der Heizleistung zusätzlich eine mechanische Positionierung der Induktionsspule(n) benötigen.

Die Heizleistung muss ebenfalls kontrolliert werden, da die Geometrie sehr starken Einfluss auf die Erwärmung bzw. die Einkoppeleffizienz oder Wirkung der Heizung hat. Für die Temperaturregelung und/oder -erfassung kann eine Infrarotkamera eingesetzt werden, die das vollständige Baufeld (einer AM-Anlage) überblickt. Die Bildinformation kann über eine Kalibrierung in eine Temperatur umgerechnet und beispielsweise an der Position der Spulen ausgewertet werden. Möglicherweise wird dabei nur eine feste Position ("region-of-interest") innerhalb des Bildes ausgewertet, die mit der Spule dann im Bild verschoben werden kann. Diese Temperatur kann weiterhin an einen Regler oder eine Regeleinrichtung mit festen Parametern übergeben werden. Nach einer Positionsverschiebung, beispielsweise zur Erwärmung eines weiteren Bereichs einer aufgebauten oder aufzubauenden Schicht im Wege der Herstellung des Bauteils, erreicht die Spule typischerweise eine weitere (kalte) Stelle und regelt die Heizleistung erneut.

Das Bild der Infrarotkamera kann innerhalb der region-of-interest, also eines "Bereichs von Interesse" ausgewertet und so ein Ist-Wert für die Temperaturregelung erzeugt werden, auf den geregelt wird.

Problematisch ist jedoch, dass die Induktion stark von der Geometrie des aufzuheizenden Metallteils oder einer gerade aufgebauten Schicht abhängt. Ein Strom oder Wirbelstrom fließt dabei bevorzugt in der bereits aufgebauten Struktur direkt unter der Heizeinrichtung oder Spule und benötigt einen geschlossenen elektrischen Kreis, um hohe Ströme und damit ein gutes Erwärmungsergebnis zu erreichen. Dieser Kreis kann seitlich außerhalb des Einflussbereichs einer Erwärmungseinrichtung bzw. Spule, beispielsweise durch gegenüberliegenden Spulenteile oder über eine bereits aufgebaute Struktur (Bauteil), geschlossen werden. Kommt es zu keinem geschlossenen Kreis, sinkt die Einkoppeleffizienz drastisch, zum Beispiel bei sehr kleinen Strukturen oder im losen Pulverbett. Wegen der kleinen Partikelgröße, üblicherweise im Bereich zwischen 10 und 100 µm im Durchmesser, wird das Pulver selbst kaum erwärmt und die Erwärmung oder ihre Effizienz wird hauptsächlich durch die Geometrie einer vorherig aufgebauten Schicht bestimmt. Es ist daher erforderlich, die Einkoppeleffizienz oder Erwärmungseffizienz, insbesondere bei pulverbett-basierten additiven Verfahren für Hochleistungskomponenten zu verbessern.

Es ist daher eine Aufgabe der vorliegenden Erfindung, Mittel anzugeben, mit welchen die Effizienz der Erwärmung oder eine Verbesserung der Einkoppeleffizienz wie beschrieben erreicht werden kann.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zum Bereitstellen von Daten für eine Temperaturregelung in der additiven Herstellung eines Bauteils. Das Verfahren ist vorzugsweise Teil einer Regeloptimierung für eine Temperaturkontrolle oder ein Wärmemanagement in der pulverbettbasierten additiven Herstellung.

Das Verfahren umfasst das Erfassen von Temperaturdaten bzw. Temperaturinformationen jeweils an verschiedenen oder (vor-) bestimmten Positionen ("region of interest") einer additiv aufgebauten Schicht. Diese genannte Schicht kann eine von vielen hundert oder tausend Schichten bezeichnen, welche additiv über Pulverbettprozesse nacheinander durch selektive Bestrahlung mit einem Laser- oder Energiestrahl aufgebaut werden.

Das Verfahren umfasst weiterhin das Bearbeiten der Schicht für das Bauteil mit einer, insbesondere beweglichen, Bearbeitungseinrichtung an den Positionen der Schicht, wobei Regelungsdaten beispielsweise für oder umfassend einen Steuerparameter, zur Regelung der Bearbeitungseinrichtung positionsabhängig erfasst werden.

Der Ausdruck "positionsabhängig" kann eine Ortsabhängigkeit, beispielsweise in XY-Koordinaten, auf der Schicht oder einer entsprechenden Herstellungsoberfläche bezeichnen.

Das Verfahren umfasst weiterhin das Erzeugen oder Bestimmen eines adaptierten oder optimierten Datensatzes aus den erfassten Daten, umfassend positionsabhängige adaptierte Regelungsdaten. Das Erzeugen oder Bestimmen kann beispielsweise über eine manuelle, maschinelle oder automatisierte Regleroptimierung oder andere Mittel erfolgen.

Für die Regelung kann beispielsweise ein PID-Regler zum Einsatz kommen, welcher üblicherweise bei langsamer Annäherung an einen Sollwert schärfer und bei sogenannten "Überschwingern" eher konservativer eingestellt werden kann.

Durch die Bereitstellung des adaptierten Datensatzes, insbesondere der adaptierten Regelungsdaten kann mit Vorteil eine verbesserte Regelung, beispielsweise für eine nachfolgend aufzubauende Materialschicht erreicht werden. Besonders vorteilhaft ist dabei, dass, statt eines einzelnen Satzes von Regelparametern für beliebige Geometrieen zu verwenden (Stand der Technik) nun positionsabhängig und/oder individuelle Regelparameter bereitgestellt und verwendet werden können, welche die tatsächliche und genaue Geometrie der einzelnen Schichten für das Bauteil berücksichtigen.

Gleichwohl kann die Gefahr einer Überhitzung durch Überschwinger in der Regelung oder im Temperaturverlauf vermieden werden. Ohne die vorgestellten Mittel wäre dies beispielsweise nur durch eine sehr konservative Einstellung oder Regelung und entsprechende Verlängerung der Aufbau- oder Prozesszeit möglich.

Weiterhin kann die Prozess- oder Aufbauzeit, welche den hauptsächlich effizienzlimitierenden Faktor für industrielle additive Fertigungsprozesse darstellt, auf ein Minimum reduziert werden. Die adaptive Regelung, welche durch die modifizierten oder adaptierten Daten oder Regelparameter ermöglicht wird, kann vorteilhafterweise bereits bei einzelnen Bauteilen oder beispielsweise bei dem ersten Bauteil einer Fertigungsserie ausgenutzt werden. Eine vorherige Berechnung oder auch nur eine vorherige Kenntnis der Geometrie des Bauteils ist nicht notwendig. Überdies kann das System unabhängig von der Lasersteuerung und dadurch wesentlich einfacher und robuster realisiert werden. Eine Wärmeleitung während des Prozesses als auch eine Einkoppeleffizienz, beispielsweise von elektrischer Leistung in das System können ebenfalls berücksichtigt werden.

In einer Ausgestaltung wird eine weitere, beispielsweise im Wege der Herstellung des Bauteils auf die oben genannte Schicht folgende Schicht, gemäß dem adaptierten Regelungsdaten von der Bearbeitungseinrichtung (siehe unten) bearbeitet.

In einer Ausgestaltung bezeichnen die Regelungsdaten Daten bzw. Informationen oder Parameter eines oder für einen PID-Regler. Alternativ kann es sich bei den Regelungsdaten um entsprechende Informationen für einen PI-Regler oder einen PD Regler oder einen anderen Regler oder eine andere Regelungseinrichtung handeln.

In einer Ausgestaltung umfasst der adaptive Datensatz nur die adaptierten Regelungsdaten. Gemäß dieser Ausgestaltung können bereits die erfindungsgemäßen Vorteile genutzt und die Regelung entsprechend verbessert werden. Gleichzeitig kann der Aufwand für die Generierung bzw. Bereitstellung des adaptierten Datensatzes minimiert werden.

In einer Ausgestaltung umfasst der adaptive Datensatz zusätzlich zu den adaptierten Regelungsdaten Temperaturdaten und/oder beispielsweise weitere Daten oder Informationen. Gemäß dieser Ausgestaltung, beispielsweise indem weitere Temperaturdaten erhoben und verarbeitet werden oder die Geometrie des Bauteils schichtweise erneut berücksichtigt wird, kann die Genauigkeit und damit das Regelergebnis zusätzlich verbessert werden.

In einer Ausgestaltung umfassen die Regelungsdaten einen Steuerparameter oder Regeln diesen, wobei der Steuerparameter geeignet ist - für die Bearbeitung der Schicht durch die Bearbeitungseinrichtung - eine Heizleistung zur Vorwärmung einer Schicht während des additiven Aufbaus des Bauteils zu steuern.

Der Ausdruck "während" im Zusammenhang mit der additiven Herstellung des Bauteils soll vorliegend bedeuten, dass beispielsweise eine Schicht während der Herstellung des Bauteils insgesamt, jedoch (schichtweise) nach dem jeweiligen Verfestigen der Schicht vorzugsweise von der Bearbeitungsvorrichtung bearbeitet wird.

In einer Ausgestaltung werden die zu erfassenden Regelungsdaten pro Position auf der Schicht über einen vorbestimmten zeitlichen Verlauf hinweg erfasst und/oder gespeichert. Idealerweise werden die aktuellen Regelungsdaten oder - informationen, beispielsweise für die Integration und Differentiation des Reglers, mitgespeichert.

In einer Ausgestaltung wird der adaptierte Datensatz, insbesondere die adaptierten Regelparameter oder Regelungsdaten mittels maschineller Optimierungsverfahren, beispielsweise umfassend künstliche neuronale Netze oder genetische bzw. evolutionäre Algorithmen, erzeugt.

In einer Ausgestaltung ist das Verfahren ein computerimplementiertes Verfahren.

In einer Ausgestaltung ist das Verfahren ein rekursives Verfahren, welches beispielsweise im Wege der (additiven) Herstellung des Bauteils für aufeinanderfolgende Schichten für das Bauteil erneut, wiederholt oder immer wieder angewendet wird. Gemäß dieser Ausgestaltung kann die Regelung und damit die Prozesseffizienz als auch das Wärmemanagement für das Bauteil zusätzlich verbessert werden.

In einer Ausgestaltung wird das Verfahren zur Vorwärmung von Schichten aus, insbesondere nickel- oder kobaltbasierten, Superlegierungen während der Herstellung von Hochleistungsbauteilen, insbesondere Heißgasturbinenteilen, verwendet.

Ein weiterer Aspekt der vorliegenden Anmeldung betrifft eine Vorrichtung oder ein System zum Steuern einer, zweckmäßigerweise beweglichen, Bearbeitungseinrichtung, insbesondere einer induktiven Heizeinrichtung, umfassend Mittel zur Ausführung des beschriebenen Verfahrens. Bei diesen Mitteln kann es sich um ein Computerprogramm, ein Computerprogrammprodukt, ein Datenstrukturprodukt oder entsprechende andere Computerprogramm-Mittel handeln.

Die Vorrichtung umfasst weiterhin eine Temperaturerfassungseinrichtung, einen Computer oder eine Datenverarbeitungseinrichtung und eine Regelungseinrichtung, vorzugsweise einen PID-Regler.

In einer Ausgestaltung umfasst die Temperaturerfassungseinrichtung eine Infrarotkamera. Gemäß dieser Ausgestaltung können besonders einfach und zweckmäßig ein Temperaturbild einer additiv aufgebauten Schicht ermittelt und Temperaturdaten besonders einfach und schnell erfasst werden.

In einer Ausgestaltung umfasst die Bearbeitungseinrichtung eine induktive Heizeinrichtung.

In einer Ausgestaltung ist die Bearbeitungseinrichtung eine induktive Heizeinrichtung.

In einer Ausgestaltung ist die Vorrichtung derart eingerichtet, dass die Temperaturerfassungseinrichtung, der Computer, die Regelungseinrichtung und eine an die Vorrichtung gekoppelte induktive Heizeinrichtung zusammen mit einer Struktur mindestens einer, beispielsweise zuvor, bereits aufgebauten Schicht des Bauteils ein Messsystem bzw. eine Regelkette bilden. Über dieses Messsystem, welches also einen Teil des Bauteils mit einbezieht, kann vorteilhafterweise die Effizienz, mit der beispielsweise von der Bearbeitungseinrichtung Energie in das Messsystem eingebracht und so das Bauteil erwärmt wird (Einkoppeleffizienz) berücksichtigt, kontrolliert und/oder verbessert werden. Mit anderen Worten kann die Wirkung der Bearbeitungseinrichtung, insbesondere Heizeinrichtung, auf die Struktur des Bauteils verbessert werden.

Für den Fall, dass in der aktuell aufzubauenden Schicht nur eine kleine Querschnittsfläche einer Struktur aufzubauen ist, ist die Möglichkeit, Wärme in das Bauteil einzubringen und auch wieder abzuleiten dadurch begrenzt, dass pulverförmiges Basismaterial für das Bauteil thermisch quasi-isolierend ist. Durch das bereitgestellte Messsystem kann insbesondere eine schnelle, stabile und/oder genaue Regelung der Temperatur des Bauteils und eine entsprechend wirkungsvolle (induktive) Erwärmung des Bauteils ermöglicht werden.

In einer Ausgestaltung ist die Vorrichtung Teil einer additiven Herstellungsanlage, insbesondere eine Anlage zur pulverbett-basierten additiven Fertigung.

Ein weiterer Aspekt der vorliegenden Erfindung betrifft ein Computerprogrammprodukt, umfassend Befehle, welche bei der Ausführung des Programms durch einen Computer diesen veranlassen, den adaptierten Datensatz, wie oben beschrieben, zu erzeugen. Das Computerprogrammprodukt kann beispielsweise entsprechende Computerprogramm-Mittel umfassen, welche erforderlich sind, um den adaptierten Datensatz entsprechend zu erzeugen oder bereitzustellen.

Ein weiterer Aspekt der vorliegenden Erfindung betrifft ein computerlesbares Medium, auf dem das oben genannte Computerprogramm bzw. Computerprogrammprodukt gespeichert ist.

Ein weiterer Aspekt der vorliegenden Erfindung betrifft ein Verfahren zur additiven Herstellung des Bauteils, umfassend den schichtweisen additiven Aufbau des Bauteils aus einem Pulver oder pulverförmigen Basismaterial, wobei nach dem oder während des Verfestigen(s) bzw. des Aufbaus einer Pulverschicht mittels eines Energiestrahls, insbesondere eines Lasers, diese Schicht anhand des wie oben beschrieben bereitgestellten adaptierten Datensatzes oder entsprechender Regel- oder Steuerparameter mittels der Bearbeitungseinrichtung bearbeitet wird. Die verbesserten Regelparameter des adaptierten Datensatzes können also direkten Einfluss auf das nachfolgende Fertigungsverfahren haben, da anhand der adaptierten Daten die Wärmebearbeitung des Bauteils entscheidend verbessert und damit ebenfalls verbesserte Material oder Struktureigenschaften erzielt werden können.

Ein weiterer Aspekt der vorliegenden Erfindung betrifft ein Bauteil, welches gemäß dem Verfahren zur additiven Herstellung hergestellt oder herstellbar ist. Das Bauteil umfasst, beispielsweise im Gegensatz zu einem konventionell hergestellten Bauteil des Standes der Technik oder einem additiv hergestellten Bauteil des Standes der Technik eine weitgehend rissfreie und/oder spannungsarme, insbesondere einkristalline und/oder stängelkristalline, Mikrostruktur.

Die vorliegend beschriebenen Mittel sind vorzugsweise geeignet, um eine Bearbeitung oder Vorwärmung des Bauteils oder einer nachfolgend herzustellenden Bauteilschicht auf eine Temperatur von über 1000 °C zu erwärmen.

Ausgestaltungen, Merkmale und/oder Vorteile, die sich vorliegend auf das Verfahren zum Bereitstellen von Daten, das Computerprogrammprodukt oder die Vorrichtung beziehen, können - wie dargelegt - ferner den additiven Herstellungsprozess oder das Bauteil selbst betreffen, oder umgekehrt.

Weitere Merkmale, Eigenschaften und Vorteile der vorliegenden Erfindung werden im Folgenden anhand von Ausführungsbeispielen unter Bezugnahme auf die beigefügten Figuren näher erläutert. Alle bisher und im Folgenden beschriebenen Merkmale sind dabei sowohl einzeln als auch in Kombination miteinander vorteilhaft. Es versteht sich, dass andere Ausführungsformen benutzt und strukturelle oder logische Änderungen vorgenommen werden können, ohne von dem Schutzumfang der vorliegenden Erfindung abzuweichen. Die folgende Beschreibung ist deshalb nicht in einschränkendem Sinne aufzufassen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.
- Figur 1: zeigt eine schematische Schnittansicht eines Bauteils während seiner additiven Herstellung.
- Figur 2: zeigt eine schematische Aufsicht auf einen Bauteilquerschnitt, welcher mit einer Bearbeitungseinrichtung bearbeitet wird.
- Figur 3: deutet anhand einer schematischen Aufsicht auf eine verfestigte Bauteilschicht eine Abfolge von mehreren Bearbeitungsschritten an.
- Figur 4: zeigt ein schematisches Flussdiagramm, welches Verfahrensschritte des beschriebenen Verfahrens andeutet.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

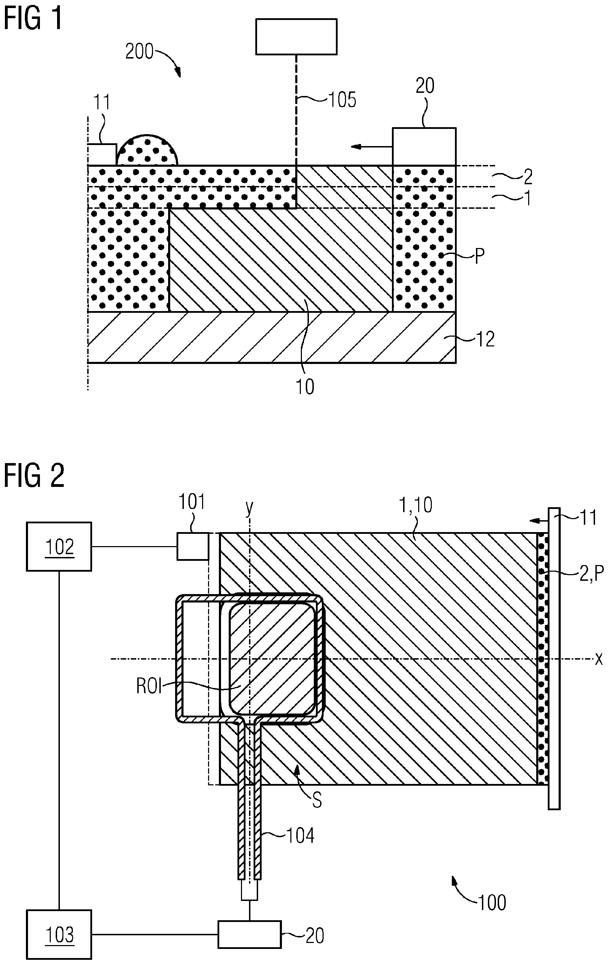

Figur 1 deutet anhand einer schematischen Schnittansicht die additive Herstellung eines Bauteils 10 aus einem Pulverbett an, vorzugsweise durch selektives Laserschmelzen oder Elektronenstrahlschmelzen. Eine entsprechende additive Herstellungsanlage ist mit dem Bezugszeichen 200 gekennzeichnet.

Ein Ausgangsmaterial P für das Bauteil 10 wird dabei schichtweise selektiv von einem Energiestrahl, vorzugsweise einem Laserstrahl 105, gemäß der gewünschten (vorbestimmten) Geometrie bestrahlt. Das Bauteil wird dazu auf einem Substrat oder einer Bauplattform 12 hergestellt bzw. mit dieser verschweißt.

Die Plattform dient dabei während der Herstellung gleichzeitig als mechanische Stütze, um das Bauteil vor thermischem Verzug zu bewahren. Nach der Verfestigung einer jeden Schicht, wird eine Herstellungsoberfläche (nicht explizit gekennzeichnet) vorzugsweise von einem Beschichter 11 neu mit Pulver P beschichtet, und das Bauteil so weiter aufgebaut. Lediglich exemplarisch sind in Figur 1 gestrichelt Schichten 1 und 2 angedeutet, deren Schichtdicken bei derartigen Prozessen üblicherweise zwischen 20 und 80 µm beträgt.

Bei dem Bauteil 10 handelt es sich vorzugsweise um ein Bauteil, welches im Heißgaspfad einer Strömungsmaschine, beispielsweise einer Gasturbine eingesetzt wird. Insbesondere kann das Bauteil eine Lauf- oder Leitschaufel, ein Segment oder Ringsegment, ein Brennerteil oder eine Brennerspitze, eine Zarge, eine Schirmung, ein Hitzeschild, eine Düse, Dichtung, einen Filter, eine Mündung oder Lanze, einen Resonator, Stempel oder einen Wirbler bezeichnen, oder einen entsprechenden Übergang, Einsatz, oder ein entsprechendes Nachrüstteil. Demgemäß handelt es sich bei dem Bauteil 10 vorzugsweise um ein in seinem bestimmungsgemäßen Betrieb thermisch und/oder mechanisch hochbelastetes Bauteil aus einer, beispielsweise kobalt- oder nickelbasierten, Superlegierung.

Eine Bearbeitungseinrichtung 20 ist ebenfalls an der rechten Seite einer Herstellungsoberfläche (rechts im Bild) angedeutet. Mittels der Bearbeitungseinrichtung kann eine neue aufgebrachte Pulverlage oder eine frisch verfestigte oder bestrahlte Bauteilschicht zweckmäßigerweise vor- und/oder nachbehandelt werden. Diese Bearbeitung ist insbesondere vorteilhaft bzw. zweckmäßig, um eine vorteilhafte oder erforderliche Wärmebehandlung (Wärmemanagement) der entsprechenden Bauteile durchzuführen, vorzugsweise in-situ während des Aufbaus.

Die großen prozessinhärenten Temperaturgradienten übersteigen bei pulverbettbasierten Prozessen häufig 10⁵ K/s und verursachen demgemäß hohe chemische Ungleichgewichtszustände, Risse und/oder mechanische Spannungen. Daher ist es zweckmäßig, beispielsweise eine neu aufgebrachte Pulverschicht (vergleiche Bezugszeichen 2) oder eine bereits verfestigte Bauteilschicht (vergleiche Bezugszeichen 1) mit einer Bearbeitungseinrichtung (vergleiche Bezugszeichen 20) thermisch zu behandeln.

Die vorliegend beschriebenen Mittel für die Bearbeitung bzw. die Bearbeitungseinrichtung 20 sind vorzugsweise geeignet, eine Bearbeitung oder Vorwärmung des Bauteils oder einer nachfolgend herzustellenden Bauteilschicht auf eine Temperatur von über 1000 °C zu erwärmen.

Figur 2 zeigt eine schematische Aufsicht auf eine frisch mit dem Energiestrahl 105 bestrahlte und verfestigte Schicht 1. Wie in Figur 1 ist hier ein Beschichter 11 oder eine Beschichtungseinrichtung zu erkennen, welche eingerichtet ist, für eine nachfolgend zu bestrahlende Schicht (vergleiche Bezugszeichen 2 in Figur 1) neues Pulver P aufzutragen.

Gemäß der Darstellung der Figur 2 ist der Querschnitt des Bauteils 10 lediglich der Übersichtlichkeit halber rechteckförmig dargestellt. Bei Bauteilen, bei denen sich eine additive Fertigung anbietet bzw. lohnt, ist dies natürlich häufig nicht der Fall und der Bauteilquerschnitt kann eine komplizierte, beispielsweise nicht geschlossene, oder Hohlräume aufweisende Geometrie haben.

Im Unterschied zur Figur 1 ist, gemäß der vorliegenden Erfindung, eine Bearbeitungseinrichtung 20 zu erkennen, welche vorzugsweise eine induktive Heizeinrichtung umfasst oder darstellt. Alternativ kann die Bearbeitungseinrichtung beispielsweise durch ein anderes Prinzip Wärme in einem Bauteilschicht einbringen.

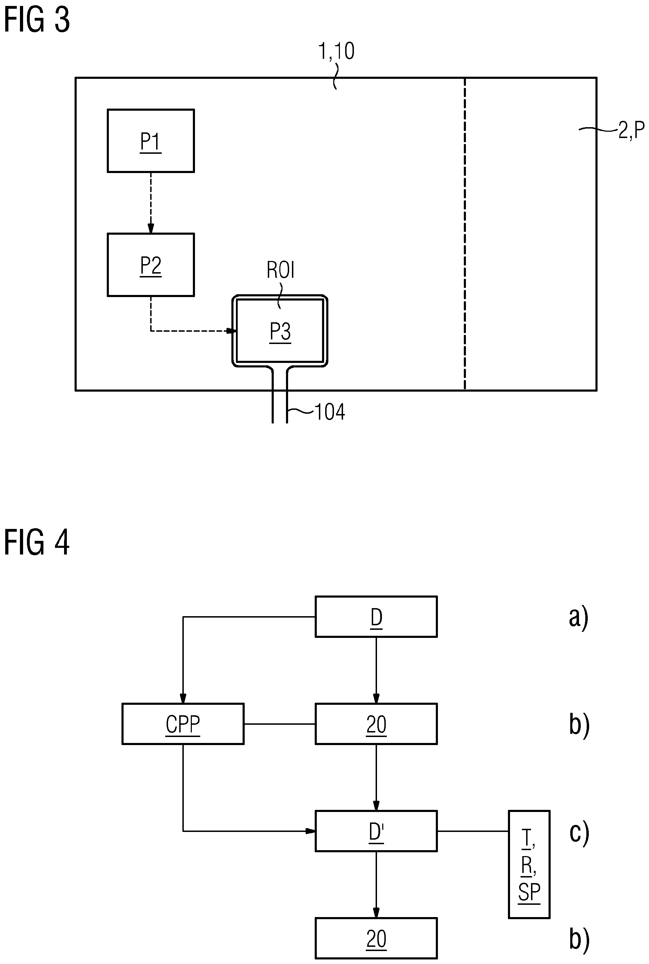

Eine konventionelle additive Herstellungsanlage (vergleiche Bezugszeichen 200 in Figur 1) umfasst vorzugsweise eine Temperaturerfassungseinrichtung 101, vorzugsweise eine Infrarotkamera, über welche vorzugsweise pro bestrahlter Schicht ein vollständiges Temperaturbild der Schicht bzw. der Herstellungsoberfläche aufgenommen werden kann. Eine Bildinformation aus dem Temperaturbild kann beispielsweise über eine Kalibrierung in eine Temperatur umgerechnet und an entsprechenden Positionen der späteren Bearbeitung (vergleiche Figur 3 weiter unten) ausgewertet werden.

Über einen Computer 102 oder eine Datenverarbeitungseinrichtung und vorzugsweise weiterhin eine Regelungseinrichtung 103 können erfasste Temperaturdaten, vorzugsweise die genannte Temperatur oder das Wärmebild der Schicht 1, gespeichert und an die Bearbeitungseinrichtung 20 übergeben oder diese entsprechend angesteuert werden.

Eine Vorrichtung 100 kann demgemäß eingerichtet sein, die Bearbeitungseinrichtung 20 zu steuern und weiterhin die genannten Computerprogramm-Mittel (vergleiche Bezugszeichen CPP weiter unten), die Temperaturerfassungseinrichtung 101, den Computer 102 und beispielsweise die Regelungseinrichtung 103 umfassen. Demgemäß kann die Vorrichtung 100 mit der Bearbeitungseinrichtung 20 gekoppelt oder verschaltet sein.

Die Bearbeitungseinrichtung 20 weist in der in Figur 2 gezeigten Ausführungsform eine induktive Heizeinrichtung bzw. eine Induktionsspule 104 auf. Obwohl dies nicht explizit dargestellt ist, kann die Einrichtung 20 auch eine Mehrzahl von Induktionsspulen aufweisen, beispielsweise eine entlang der X-Richtung verschiebbar oder beweglich angeordnete Spule und eine entlang der Y-Richtung verschiebbar oder beweglich angeordnete Spule. Die genannten Spulen können auch derart überlagert werden, dass nur in einem ausgewählten Bereich (vgl. englisch "region-of-interest" und Bezugszeichen ROI) eine gewünschte oder vordefinierte Erwärmung, beispielsweise eine Erwärmung von über 1000 °C erzielt werden kann. Der Einfachheit halber ist in Figur 2 nur eine Spule 104 gekennzeichnet, welche einen auszuwählenden Bereich ROI in vordefinierter Art erwärmen kann. Die Spule 104 ist entlang der X-Richtung beweglich und verfahrbar angeordnet. Auf gleiche Art könnte eine ähnliche Spule entlang der Y-Richtung beweglich und derart angeordnet sein, so dass der ausgewählte Bereich ROI zweckmäßig erwärmt werden kann.

Die Bearbeitungseinrichtung 20 ist ferner vorzugsweise eingerichtet, durch ihre Beweglichkeit über beliebige Positionen über dem Pulverbett bzw. der Schichtoberfläche, dass sowohl eine bereits verfestigte Bauteilschicht (vergleiche Schicht 1) als auch eine Schicht neu aufgetragenen Pulvermaterials (vergleiche Schicht 2) erwärmt werden kann. Im Gegensatz zur festen Bauteilstruktur ist jedoch eine Erwärmung des Pulvers (vgl. links in Figur 2) vernachlässigbar und die Heizleistung wird von den unten liegenden, bereits verfestigten Schichten dominiert oder aufgenommen. Diese Schichten sind beim SLM-Verfahren in der Regel deutlich dünner als die Eindringtiefe des Induktionsfeldes bzw. des die Wirbelströme induzierenden magnetischen Flusses der Spule(n) 104.

Die Vorrichtung 100 ist vorzugsweise weiterhin derart eingerichtet, dass die Temperaturerfassungseinrichtung 101, der Computer 102, die Regelungseinrichtung 103 und eine an die Vorrichtung 100 gekoppelte induktive Heizeinrichtung 20, 104 zusammen mit einer Struktur mindestens einer aufgebauten Schicht 1 des Bauteils 10 ein Messsystem S oder eine entsprechende Regelkette bilden. Dieses System bzw. diese Regelkette besteht aus der Temperaturerfassungseinrichtung 101, dem Computer 102 sowie den genannten Computerprogrammmitteln, der Einrichtung 20 bzw. der Induktionsspule 104 und der Struktur des Bauteils 10 selbst, oder umfasst diese Komponenten.

Das Messsystem S übergibt beispielsweise mit jedem aufgezeichneten Kamera- oder Temperaturbild eine Ist-Temperatur pro ausgewähltem Bereich ROI an die Regelungseinrichtung 103, welche beispielsweise einen PID Regler umfasst.

Das Bauteil 1, 10 selbst bzw. die aktuell zu heizende oder vorzuheizende Stelle kann die Regelung dabei auf zwei Weisen beeinflussen: Zum einen kann sich die Einkoppeleffizienz und damit die Wirkung der Induktionsheizung auf das Bauteil 10 ändern. Zum anderen kann die begrenzte Wärmeleitung zu einer Verzögerung zwischen Heizung und Temperaturänderung führen. Beide Größen oder Werte sind stark von der tatsächlichen Geometrie abhängig und dem Regelsystem normalerweise unbekannt. Selbst bei genau bekannter Geometrie können die Werte nur durch vollständige Simulation des elektrischen und thermischen Verhaltens ermittelt werden, das die beschriebenen Phänomene hinreichend beschreibt.

Die vorliegende Erfindung schlägt nun Mittel vor, das Regelsystem dahingehend zu optimieren und zu verbessern, dass auf die genannten Simulationen verzichtet werden kann und adaptierte Daten beziehungsweise Regelparameter aus dem System selbst abzuleiten (vergleiche Figuren 3 und 4 weiter unten) .

Figur 3 zeigt anhand einer zur Darstellung der Figur 2 ähnlichen Darstellung eine Abfolge von Bearbeitungsschritten, anhand derer eine verfestigte Bauteilschicht 1, vorzugsweise unmittelbar, nach einer Verfestigung mittels der beschriebenen Bearbeitungseinrichtung 20 bearbeitet, vorzugsweise induktiv erwärmt wird.

Eine beispielsweise auf die Legierung des Bauteils maßgeschneiderte Wärmebehandlung kann beispielsweise erforderlich oder vorteilhaft sein, um Spannungen im Bauteil zu lösen, Heißrisse zu vermeiden oder zu verhindern oder auch, um große prozessinhärente Temperaturgradienten zu verhindern, welche ihrerseits entstehende Risse, chemische Ungleichgewichte oder grundsätzlich eine Schweißbarkeit des Basismaterials unterbinden.

Bei den entsprechenden Bearbeitungsbereichen (vergleiche ROI an den Positionen P1, P2 und P3 in Figur 3) kann es sich beispielsweise um diejenigen Positionen handeln, welche auch gemäß einer Bestrahlungsstrategie nacheinander bestrahlt werden. Alternativ kann es sich um besonders ausgewählte Bereiche handeln, beispielsweise Regionen in der Schicht, welche besonders anfällig für Strukturdefekte oder sonstige, beispielsweise festigkeitsrelevante, Faktoren sind. Die Positionen können weiterhin - anders als in Figur 3 dargestellt - kontinuierlich oder stetig ineinander übergehen.

Typischerweise wird die Spule 104 bzw. die Bearbeitungseinrichtung 20 nach der Bearbeitung einer ersten Position P1 an eine folgende zweite Position P2 oder dritte Position P3 gefahren, welche dann eine noch nicht erwärmt oder kalte Stelle anzeigt, und beispielsweise in einer entsprechenden ROI der Position bearbeitet werden kann. Statt, wie in Figur 3 gekennzeichnet, drei Positionen und ROI können in der Realität pro Schicht beispielsweise mehrere hundert Positionen angefahren und bearbeitet werden.

Gemäß der vorliegenden Erfindung werden die Temperaturdaten, wie oben beschrieben, an verschiedenen Positionen der additiv aufgebauten Schicht 1 gespeichert und/oder erfasst (vergleiche Verfahrensschritt a) weiter unten). Weiterhin werden erfindungsgemäß während des Bearbeitens der Schicht, beispielsweise entlang der Positionen P1 bis P3, Regelungsdaten, beispielsweise umfassend Steuerparameter für die Bearbeitungseinrichtung, positionsabhängig und pro Position (P1 bis P3) gespeichert und/oder erfasst (vergleiche Verfahrensschritte b) in Figur 4 weiter unten). Weiterhin wird gemäß dem beschriebenen Verfahren (vergleiche Verfahrensschritte c) in Figur 4 weiter unten) ein adaptierter oder optimierter Datensatz D' aus den erfassten Daten, umfassend positionsabhängig adaptierte Regelungsdaten R' (siehe unten) erzeugt bzw. bereitgestellt.

Gemäß dem beschriebenen Verfahren können in dem adaptierten Datensatz beispielsweise nur die adaptierten Regelungsdaten, beispielsweise Regelungsdaten sowie einen Steuerparameter für einen PID-Regler als Regelungseinrichtung 103, oder zusätzlich zu den adaptierten Regelungsdaten Temperaturdaten gezählt werden.

Im Rahmen des beschriebenen Verfahrens können die zu erfassenden Regelungstaten beispielsweise pro Position auf der Schicht wieder über einen vorbestimmten zeitlichen Verlauf (nicht explizit in den Figuren gekennzeichnet) hinweg erfasst und/oder gespeichert werden. Idealerweise werden die aktuellen internen Werte für die Integration und Differentiation (im Falle eines PID-Reglers) mitgespeichert.

Es ist im Rahmen der beschriebenen Erfindung vorgesehen, dass der adaptierte Datensatz beispielsweise mittels maschineller Optimierungsverfahren, beispielsweise darstellend oder umfassend künstliche neuronale Netze oder genetische bzw. evolutionäre Algorithmen, umfasst. Alternativ können andere Optimierungsverfahren zur Bereitstellung des adaptierten Datensatzes herangezogen werden.

Das beschriebene Verfahren, insbesondere das Bereitstellen des adaptierten Datensatzes, kann weiterhin ein rekursives Verfahren sein, beispielsweise ein Verfahren, welches im Wege der additiven Herstellung des Bauteils 10 für aufeinanderfolgende Schichten erneut oder iterativ angewendet wird, beispielsweise um pro Schicht zu immer besseren adaptierten Werten für die Regelparameter zu kommen, und so die Temperaturregelung und die Prozesseffizienz immer weiter zu optimieren.

In einer einfachen Ausführung ist die Aufzeichnung der Werte für eine vollständige Schicht bzw. das vollständige Bauteil nicht notwendig. Die neuen oder adaptierten Parameter für die letzte bearbeitete Position werden dann direkt nach der Aufheizung bestimmt und nur die PID-Werte (Regelungsparameter) für die nächste Schicht, beispielsweise Schicht 2, gespeichert.

Bei Kleinserien oder auch bei großen Losen kann es beispielsweise in der industrialisierten additiven Fertigung vorteilhaft sein, die ermittelten Parameter vollständig für alle Schichten zu speichern. Da die ermittelten Parameter ja eigentlich für die aktuelle Schicht gelten und nicht für die darauffolgende, können die korrekten Werte ab dem zweiten Bauteil beispielsweise bereits in der aktuellen Schicht verwendet werden.

Figur 4 fasst anhand eines schematischen Flussdiagramms erfindungsgemäße Verfahrensschritte zusammen und deutet an, dass es sich bei dem beschriebenen Verfahren um ein computerimplementiertes Verfahren handelt, beispielsweise ein Verfahren, bei dem ein Computerprogrammprodukt oder ein entsprechendes Computerprogramm den adaptierten Datensatz erzeugt.

Das Verfahren ist ein Verfahren zum Bereitstellen von Daten D für eine Temperaturregelung in der additiven Herstellung des Bauteils 10. Das Verfahren umfasst, a), das Erfassen von Temperaturdaten T jeweils an verschiedenen Positionen P1, P2 einer additiv aufgebauten Schicht 1.

Bei den erfassten Daten D kann es sich beispielsweise um initiale Regelungsdaten R, einen Steuerparameter SP Temperaturdaten T bzw. -informationen des erfassten Temperaturbildes (siehe oben) handeln.

Das Verfahren umfasst weiterhin, b), das Bearbeiten der Schicht 1 für das Bauteil 10 mit einer Bearbeitungseinrichtung 20 an den Positionen P der Schicht 1, wobei Regelungsdaten R zur Regelung der Bearbeitungseinrichtung positionsabhängig erfasst werden.

Das Verfahren umfasst weiterhin, c), das Erzeugen eines adaptierten Datensatzes D' aus den erfassten Daten. Der adaptierte Datensatz kann beispielsweise zusätzlich zu den positionsabhängigen adaptierten Regelungsdaten R' Temperaturdaten T oder beispielsweise einen Steuerparameter SP zum Ansteuern oder Regeln der Bearbeitungseinrichtung 20, umfassen. Insbesondere dieser Verfahrensschritt kann durch ein Computerprogramm oder ein entsprechendes Computerprogrammprodukt CPP implementiert durchgeführt werden.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Verfahren zum Bereitstellen von Daten (D) für eine Temperaturregelung in der additiven Herstellung eines Bauteils (10), umfassend:
- a) Erfassen von Temperaturdaten (T) jeweils an verschiedenen Positionen (P1, P2) einer additiv aufgebauten Schicht (1),
- b) Bearbeiten der Schicht (1) für das Bauteil (10) mit einer Bearbeitungseinrichtung (20) an den Positionen (P) der Schicht (1), wobei Regelungsdaten (R) zur Regelung der Bearbeitungseinrichtung positionsabhängig erfasst werden, und
- c) Erzeugen eines adaptierten Datensatzes (D') aus den erfassten Daten (R, T) umfassend positionsabhängige adaptierte Regelungsdaten (R').

2. Verfahren gemäß Anspruch 1, wobei eine weitere im Wege der Herstellung des Bauteils (10) auf die Schicht (1) folgende Schicht (2), gemäß den adaptierten Regelungsdaten (R') bearbeitet wird.

3. Verfahren gemäß Anspruch 1 oder 2, wobei die Regelungsdaten (R) Daten bzw. Parameter eines oder für einen PID-Regler bezeichnen.

4. Verfahren gemäß einem der vorhergehenden Ansprüche, wobei der adaptierte Datensatz (D') nur die adaptierten Regelungsdaten (R') umfasst.

5. Verfahren gemäß einem der vorhergehenden Ansprüche, wobei der adaptierte Datensatz (D') zusätzlich zu den adaptierten Regelungsdaten Temperaturdaten (T) umfasst.

6. Verfahren gemäß einem der vorhergehenden Ansprüche, wobei die Regelungsdaten einen Steuerparameter (SP) umfassen oder regeln, der geeignet ist, für die Bearbeitung eine Heizleistung zur Vorwärmung einer Schicht (1, 2) während des Aufbaus des Bauteils (10) zu steuern.

7. Verfahren gemäß einem der vorhergehenden Ansprüche, wobei die zu erfassenden Regelungsdaten (R) pro Position (P) auf der Schicht (1) über einen vorbestimmten zeitlichen Verlauf hinweg erfasst und/oder gespeichert werden.

8. Verfahren gemäß einem der vorhergehenden Ansprüche, wobei der adaptierte Datensatz (D') mittels maschineller Optimierungsverfahren erzeugt wird.

9. Verfahren gemäß einem der vorhergehenden Ansprüche, welches ein computerimplementiertes Verfahren ist.

10. Verfahren gemäß einem der vorhergehenden Ansprüche, welches ein rekursives Verfahren ist, das im Wege der Herstellung des Bauteils (10) für aufeinander folgende Schichten (1) erneut angewendet wird.

11. Vorrichtung (100) zum Steuern einer Bearbeitungseinrichtung (20), insbesondere einer induktiven Heizeinrichtung, umfassend:
- Mittel zur Ausführung der Schritte des Verfahrens nach einem der vorhergehenden Ansprüche,
- eine Temperaturerfassungseinrichtung (101),
- einen Computer (102), und
- eine Regelungseinrichtung (103).

12. Vorrichtung (100) gemäß Anspruch 11, welche derart eingerichtet ist, dass die Temperaturerfassungseinrichtung (101), der Computer (102), die Regelungseinrichtung (103) und eine an die Vorrichtung (100) gekoppelte induktive Heizeinrichtung (20, 104) zusammen mit einer Struktur mindestens einer aufgebauten Schicht (1) des Bauteils (10) ein Messsystem (S) bilden.

13. Vorrichtung (100) gemäß einem der Ansprüche 11 oder 12, welche Teil einer additiven Herstellungsanlage (200), insbesondere einer Anlage zur pulverbett-basierten additiven Fertigung, ist.

14. Computerprogrammprodukt (CPP), umfassend Befehle, welche bei der Ausführung des Programms durch einen Computer (102) diesen veranlassen, den adaptierten Datensatz (D') nach einem der Ansprüche 1 bis 10 zu erzeugen.

15. Verfahren zur additiven Herstellung eines Bauteils (10) umfassend den schichtweisen additiven Aufbau des Bauteils (10) aus einem Pulver (P), wobei nach dem oder während des Verfestigen(s) einer Pulverschicht mittels eines Energiestrahls (105), diese Schicht anhand des adaptierten Datensatzes (D') nach einem der Ansprüche 1 bis 10 mittels der Bearbeitungseinrichtung (20) bearbeitet wird.
